# EUROPÄISCHE PATENTSCHRIFT

(11) **EP 0 359 708 B1**
(45) Veröffentlichungstag und Bekanntmachung des Hinweises auf die Patenterteilung: **28.09.1994**
(21) Anmeldenummer: 89810664.6
(22) Anmeldetag: 05.09.1989
(51) Int. Cl.: C09B 29/20, C09B 29/32, C08K 5/23

(54) **Monoazoverbindungen mit langkettigen Alkylresten**
Monoazo compounds with long-chain alkyl rests
Composés monoazoiques avec des restes alkyles à longue chaîne

(30) Priorität: 14.09.1988 CH 3430/88
(43) Veröffentlichungstag der Anmeldung: 21.03.1990
(73) Patentinhaber: CIBA-GEIGY AG, 4002 Basel (CH)
(72) Erfinder: Hari, Stefan, Dr., D-4153 Reinach (DE); Wallquist, Olof, Dr., CH-1723 Marly (CH); Von der Crone, Jost, Dr., CH-1732 Arconciel (CH)

(56) Entgegenhaltungen:
- EP-A- 0 041 605
- EP-A- 0 057 020
- EP-A- 0 088 726
- EP-A- 0 138 761
- EP-A- 0 162 806

## Beschreibung

Die vorliegende Erfindung betrifft neue Monoazoverbindungen enthaltend mindestens einen langkettigen Alkylrest und ihre Verwendung zum Massefärben von Kunststoffen, insbesondere von Polyolefinen.

Azopigmente mit Alkylresten sind schon lange bekannt. Rote Monoazopigmente sind z.B. im US-Patent Nr. 3 124 565 und im GB-Patent Nr. 1 238 896 (2,3-Oxynaphthoylaminobenzimidazolonbasis) und in den US-Patenten Nr. 4 229 344, Nr. 4 392 999 und Nr. 3 113 938 (2,3-Oxynaphthoesäureheteroarylidbasis) beschrieben, während gelbe Monoazoverbindungen z.B. in den US-Patenten Nr. 3 096 321 (Acetoacetylaminobenzolbasis), Nr. 3 555 002, Nr. 3 555 003 und Nr. 4 150 019 (Acetoacetylaminobenzimidazolonbasis) offenbart werden. Ein Hauptmerkmal der dort aufgeführten Verbindungen besteht darin, dass sie mindestens einen niederen Alkylrest mit höchstens 6 C-Atomen aufweisen. Die dort beschriebenen Produkte werden zum Färben von Kunststoffen und Lacken vorgeschlagen. Sie besitzen zwar im allgemeinen gute Pigmenteigenschaften, sie genügen jedoch insbesondere aufgrund ungenügender Dispergierbarkeit in bestimmten Anwendungen nicht immer den heutigen Anforderungen der Technik.

In EP-A 41605 werden Verbindungen ähnlicher Struktur, die einerseits bestimmte Alkoxy- oder Phenoxyphenylreste oder Naphthylreste und andererseits als langkettige Alkylreste Decylreste enthalten, als Farbstoffe zum Färben und/oder Bedrucken von cellulosehaltigem Textilmaterial beschrieben.

Weiterhin ist gemäss der DE-Offenlegungsschrift Nr. 3 634 393 bekannt, Azofarbstoffe mit Carbonsäurefunktionen als Solventfarbstoffe zum Färben filmbildender Polymere, wie Celluloseacetate, Nitro- und Ethylcellulose, Polyvinylchlorid, Polyvinylbutyral, Shellack, modifiziertes Collophonium, Polyamid- oder Polyacrylsäureharze, zu verwenden. Bei den Carbonsäurefunktionen handelt es sich um Alkylamid-und/oder Alkylesterreste, wobei die Summe der C-Atome in den Ester- und/oder Amidgruppen des Moleküls grösser als 8 ist. Derartige Farbstoffe zeichnen sich durch eine sehr hohe Löslichkeit in den organischen hydroxylgruppenhaltigen Lösungsmitteln, wie sie bei der Färbung der oben erwähnten Polymere eingesetzt werden, aus.

Schliesslich sind in der CH-Patentschrift Nr. 329048 fettlösliche Azofarbstoffe beschrieben, welche sich z.B. von einer Naphthol-AS-Komponente ableiten und in der Diazokomponente einen langkettigen Carbonsäurealkylesterrest, z.B. mit 18 C-Atomen, enthalten.

Es ist nun gefunden worden, dass sich Monoazopigmente enthaltend mindestens einem langkettigen Alkylrest überraschenderweise sehr gut zum Massefärben von Kunststoffen, inbesondere von Polyolefinen, eignen. Diese Pigmente weisen eine ausgezeichnete Dispergierbarkeit, eine geringe Ausblühtendenz und gute allgemeine Pigmenteigenschaften auf.

Die vorliegende Erfindung betrifft demnach Verbindungen der Formeln I und 11 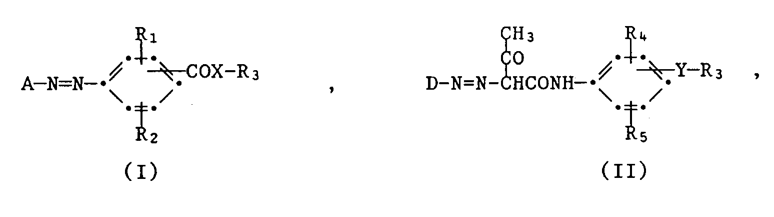 worin A für einen Rest der Formeln 111, IV oder V 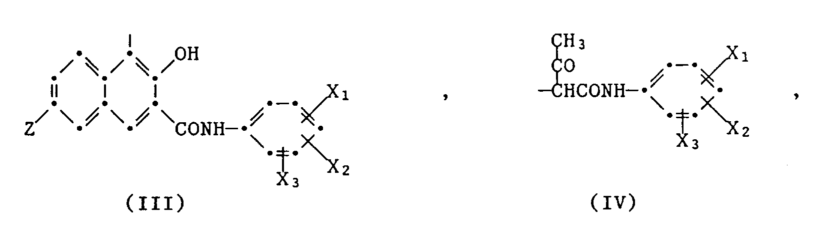 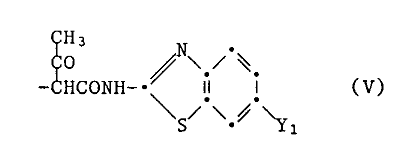 steht,
R₁ und R₄ -H oder -CI,
R₂ und R₅ -H, Halogen, -N0₂, -CN, C₁-C₄-Alkyl, C₁-C₄-Alkoxy, -CF₃ oder unsubstituiertes oder durch ein oder zwei Chloratome und/oder eine oder zwei Methyl- oder Methoxygruppen substituiertes Phenyloxy, und
R₃ C₁₂-C₃₅-Alkyl bedeuten,
X für einen Rest der Formeln -NH-, -O-, 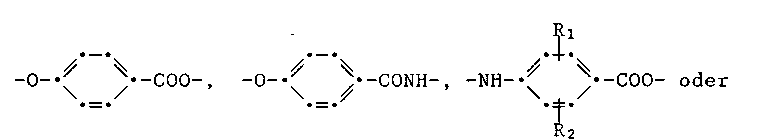 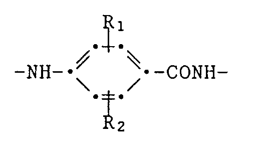 steht,
Y ein Rest der Formeln -COO- oder -CONH- ist,
D einen aromatischen heterocyclischen 5- oder 6-Ring bedeutet, wobei der Ring 1 oder 2 N-Atome enthält und noch ein O-Atom oder S-Atom aufweisen kann,
Z -H, -Br, -OCH₃, -CN oder -N0₂ und
X₁ und X₂ unabhängig voneinander -H, -CI, -CH₃ oder -OCH₃, und X₃ -H, -NHCOCH₃, unsubstituiertes oder durch ein oder zwei Chloratome und/oder eine oder zwei Methyl-oder Methoxygruppen oder durch -NHCOCH₃ substituiertes Benzoylamino oder Phenylcarbonamido sind, oder X₂ und X₃ zusammen mit dem Kohlenstoffatom, an das sie gebunden sind, einen Ring der Formeln 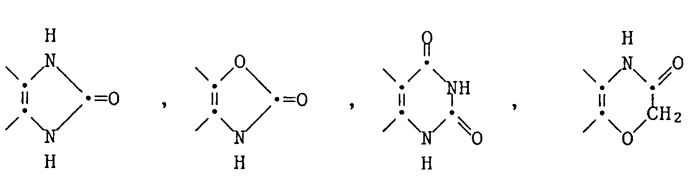 oder, wenn A für einen Rest der Formel III steht, zusätzlich auch 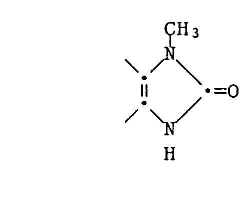 bilden und Y₁ -H, -OCH₃, -OC₂Hs oder -NHCOCH₃ bedeutet, mit der Massgabe, dass X₃ nicht H sein darf, wenn X -O- oder -NH- bedeutet.

Die oben dargestellten Formeln stellen eine der möglichen tautomeren Formen dar.

Halogen in den oben aufgeführten Gruppen bedeutet Fluor, Brom und insbesondere Chlor.

C₁-C₄-Alkyl als R₂ und R₅ oder in den Resten -NHCO-C₁-C₄-Alkyl bei X₃ bedeutet Methyl, Ethyl, n-Propyl, Isopropyl, n-Butyl, Isobutyl und tert-Butyl, insbesondere aber Methyl.

C₁-C₄-Alkoxy als R₂ und R₅ bedeutet z.B. Methoxy, Ethoxy, n-Propoxy, Isopropoxy, n-Butoxy und tert.-Butoxy, insbesondere aber Methoxy.

Z ist bevorzugt -H.

C₁₂-C₃₅-Alkyl in der Definition von R₃ ist verzweigtes oder geradkettiges Alkyl, z.B. n-Dodecyl, n-Tridecyl, Isotridecyl, n-Tetradecyl (Myristyl), n-Pentadecyl, n-Hexadecyl, 1-Methylpentadecyl, n-Octadecyl, n-Eicosyl, n-Tetracosyl, n-Hexacosyl, n-Triacontyl und n-Pentatriacontyl.

R₃ steht bevorzugt für C₁₂- bis C₁₈-Alkyl, oder Gemische davon, und leitet sich z.B. von den als Alfole bekannten und käuflichen Alkoholen ab, welche als Ausgangsprodukte verwendet werden und im wesentlichen Alkylgruppen mit gleicher C-Zahl besitzen und überwiegend verzweigt sind. Die Alkylgruppen werden hier als "Alfyl" bezeichnet, z.B. Alfyl-C₁₂, Alfyl-C₁₄. Langkettige Alkylaminreste mit 12-35 C-Atomen, welche als Ausgangsprodukte verwendet werden, leiten sich von z.B. Lauryl-, Myristyl- und Stearylamin ab.

Besonders bevorzugt sind Verbindungen der Formeln VI und VII 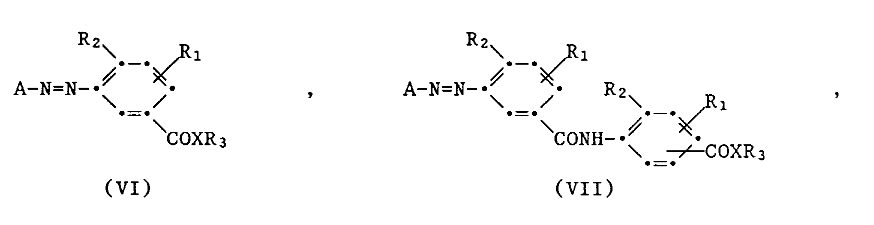 worin X für -O- oder -NH- steht, R₁ -H oder -CI, und R₂ -CI, -CH₃, -OCH₃, -OC₂H₅ oder -OC₆H₅ bedeuten, A für einen Rest der Formel III steht, wobei Z -H, X₁ und X₂ unabhängig voneinander -H, -CI, -CH₃ oder -OCH₃, und X₃ -H, -NHCOCH₃, unsubstituiertes oder durch ein oder zwei Chloratome und/oder eine oder zwei Methyl-oder Methoxygruppen oder durch -NHCOCH₃ substituiertes Benzoylamino oder Phenylcarbonamido sind, oder X₂ und X₃ zusammen mit dem Kohlenstoffatom, an das sie gebunden sind, einen Ring der Formeln 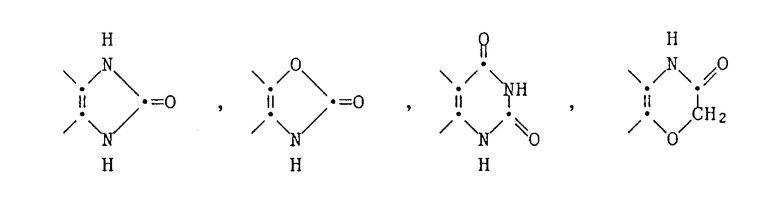 oder, wenn A für einen Rest der Formel III steht, zusätzlich auch 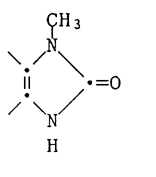 bilden und R₃ C₁₂-C₁₈-Alkyl, insbesonders C18-Alkyl, ist, mit der Massgabe, dass X₃ bei der Formel VI nicht -H sein darf, wenn X -O- oder -NH- bedeutet.

Besonders bevorzugt sind Verbindungen der Formeln VI und VII, worin R₁ -H und R₂ -CI, -CH₃ oder -OCH₃ bedeuten, und sich die Gruppe -COXR₃ (in der Formel VII) in p-Stellung zur Gruppe R₂ befindet.

Ganz besonders bevorzugt sind Verbindungen der Formel VIII, 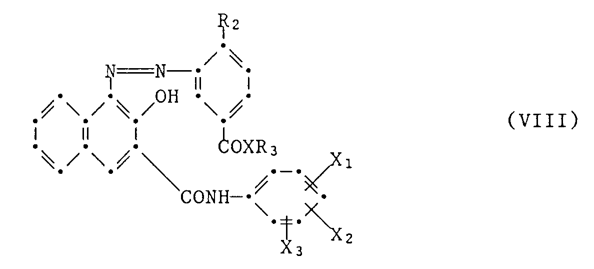 worin X für -O- oder -NH- steht, R₂ -CH₃ und R₃ C₁₂-C₁₈-Alkyl, insbesonders C₁₈-Alkyl, sind, und X₁ , X₂ und X₃ die oben angegebene Bedeutung haben. In obiger Formel VIII stehen X₁ und X₂ bevorzugt für -H, -CI oder -CH₃ und X₃ für unsubstituiertes oder durch -CI oder -CH₃ substituiertes Benzoylamino.

Beispiele für Verbindungen der obigen Formel I, worin A für einen Rest der Formel IV steht und der obigen Formel II weisen die Formeln auf: 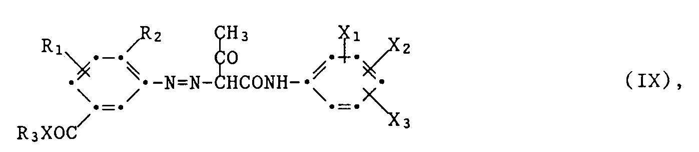 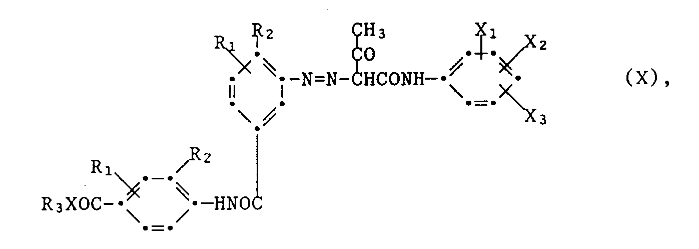 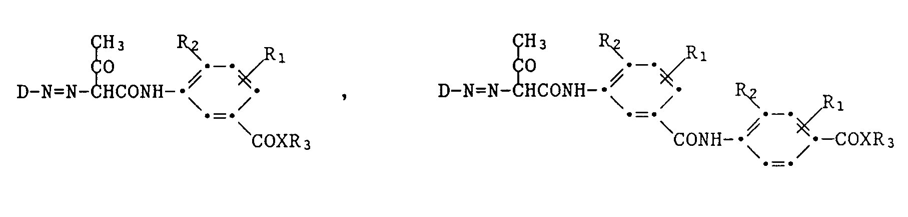 worin X für -O- oder -NH- steht, R₁ -H oder -CI, R₂ -CI, -CH₃ oder -OCH₃ und R₃ C₁₂-C₁₈-Alkyl bedeuten, X₁ und X₂ unabhängig voneinander -H, -CI, -CH₃ oder -OCH₃, und X₃ -H, -NHCOCH₃, unsubstituiertes oder durch ein oder zwei Chloratome und/oder eine oder zwei Methyl- oder Methoxygruppen oder durch -NHCOCH₃ substituiertes Benzoylamino bedeuten, oder X₂ und X₃ zusammen mit dem Kohlenstoffatom, an das sie gebunden sind, einen Ring der Formeln 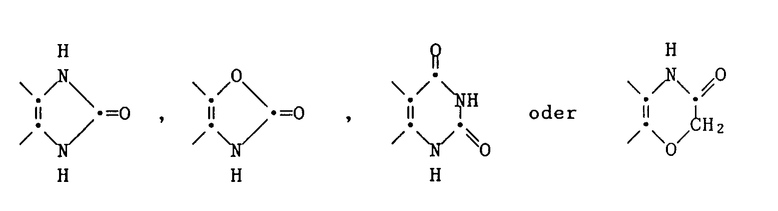 bilden, und D einen 5-Benzimidazolonyl-, 5- oder 6-Benzoxazolonyl-, 6-(2,4-Dihydroxy)-chinazolinyl-, 6- oder 7-(4-Methyl-chinolon-2-yl-,6- oder 7-Phenylmorpholon-3-yl- oder 6-Chinazolon-4-ylrest bedeutet.

Bevorzugt sind Verbindungen der Formel IX und X, worin X für -O- oder -NH-steht, R₁ -H oder -CI, R₂ -Cl, -CH₃ oder -OCH₃ und R₃ C₁₂-C₁₈-Alkyl bedeuten, X₁ und X₂ unabhängig voneinander -H, -CI, -CH₃ oder -OCH₃, und X₃ -H, -NHCOCH₃, unsubstituiertes oder durch ein oder zwei Chloratome und/oder eine oder zwei Methyl- oder Methoxygruppen oder durch -NHCOCH₃ substituiertes Benzoylamino bedeuten, oder X₂ und X₃ zusammen mit dem Kohlenstoffatom, an das sie gebunden sind, einen Ring der Formeln 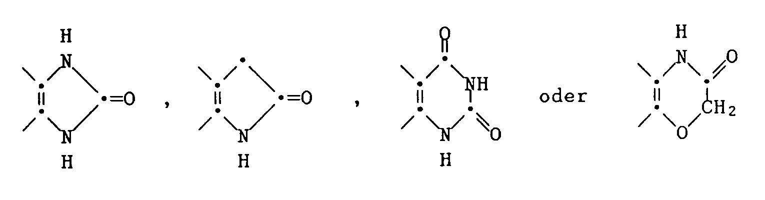 bilden.

Ganz bevorzugt sind Verbindungen der Formel IX, worin X für -O- oder -NH-steht, R₁ -H, R₂ -CH₃ und R₃ C₁₂-C₁₈-Alkyl bedeuten, X₁ -H und X₂ und X₃ zusammen mit dem Kohlenstoffatom, an das sie gebunden sind, einen Ring der Formeln 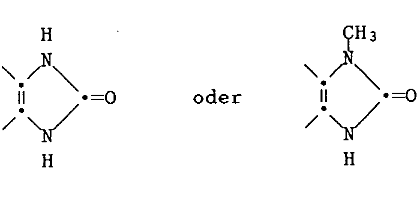 bilden.

Die Verbindungen der Formel I können nach an und für sich bekannten Verfahren hergestellt werden, z.B.:
a) durch Kondensation von 1 Mol eines Carbonsäurehalogenides, insbesondere eines Chlorides, der Formel 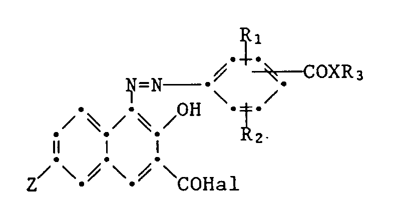 mit einem Amin der Formel 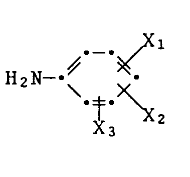 gemäss z.B. US-Patent Nr. 4 689 403, oder durch Kondensation eines Carbonsäurehalogenides, insbesondere eines Chlorides, der Formel 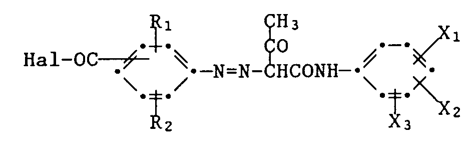 mit 1 Mol eines erfindungsgemäss langkettigen Alkohols R₃-OH oder eines Amins R₃NH₂, z.B. gemäss US-Patent Nr. 4 065 448, oder
b) durch Diazotierung eines Amins der Formel 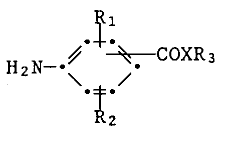 und anschliessende Kupplung der erhaltenen Diazokomponente mit einer Kupplungskomponente der Formeln 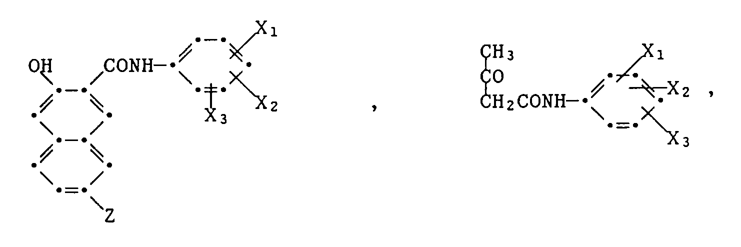 z.B. gemäss US-Patent Nr. 4 003 886, wobei die Gruppen n, R₁ bis R₃, Hal, X, X₁ , X₂, X₃ und Z die oben angegebene Bedeutung haben.

Das Kondensationsverfahren gemäss obigem Schema a) wird zweckmässig in Gegenwart eines organischen inerten Lösungsmittels bei Normal- oder Ueberdruck, mit oder ohne Katalysator, durchgeführt. Geeignete Lösungsmittel sind z.B. Toluol, Chlorbenzol, Dichlorbenzole, wie o-Dichlorbenzol, ferner Trichlorbenzole, Nitrobenzol oder Gemische aromatischer und/oder aliphatischer Lösungsmittel, wie @Shellsole.

Die Verbindungen der Formeln I, worin X -O- oder -NH- bedeutet, können auch über eine Umesterungs- bzw. Amidierungsreaktion hergestellt werden, indem man eine Verbindung der Formeln 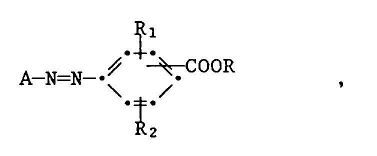 worin R zweckmässig C₁-C₃-Alkyl bedeutet, und die übrigen Reste n, A, R₁ und R₂ die oben angegebene Bedeutung haben, mit einem Alkohol der Formel R₃-OH oder einem Amin der Formel R₃-NH₂, nach bekannten Verfahren zu Verbindungen der Formel I umestert bzw. amidiert. R bedeutet Methyl, Ethyl, Propyl oder Isopropyl.

Die Umesterung bzw. Amidierung erfolgt zweckmässig direkt in einem Ueberschuss des entsprechenden langkettigen Alkohols bzw. Amins, gegebenenfalls in Gegenwart eines organischen Lösungsmittels, wie z.B. Toluol, Xylole, Dichlorbenzole, Nitrobenzol, Chlornaphthalin, Anisol, ®Dowtherm, oder Ketone, wie Cyclohexanon, bei erhöhter Temperatur, z.B. im Siedebereich des verwendeten Lösungmittels, unter Normaldruck oder unter Druck, mit oder ohne Katalysatoren. Werden Katalysatoren eingesetzt, so sind z.B. Schwefelsäure, p-Toluolsulfonsäure, Methylsulfonsäure, LiH, LiNH₂, NaOCH₃, Kalium-tert-Butylat, Tetraalkyltitanate, Dibutylzinnoxid oder seltene Erden geeignet.

Die Verbindungen der Formel II können hergestellt werden, indem man z.B. ein Amin der Formel H₂N-D diazotiert und die resultierende Diazokomponente mit einer Kupplungskomponente der Formel 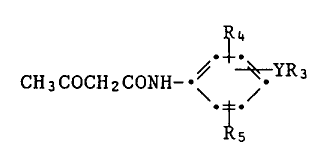 kuppelt,
worin D, R₄, Rs, Y und R₃ die oben angegebene Bedeutung haben.

Die meisten obigen Kupplungskomponenten stellen bekannte Zwischenprodukte dar. Nur die unter zuletzt genannter Formel fallenden Kupplungskomponenten sind noch neu. Die Carbonsäurehalogenide auf β-Oxynaphthoesäurebasis sowie deren entsprechende Säuren stellen auch neue Zwischenprodukte dar. Sie können nach bekannten Verfahren, z.B. gemäss US Patent Nr. 4689403, erhalten werden. Einen weiteren Erfindungsgegenstand stellen daher Verbindungen der folgenden Formeln XI und XII dar: 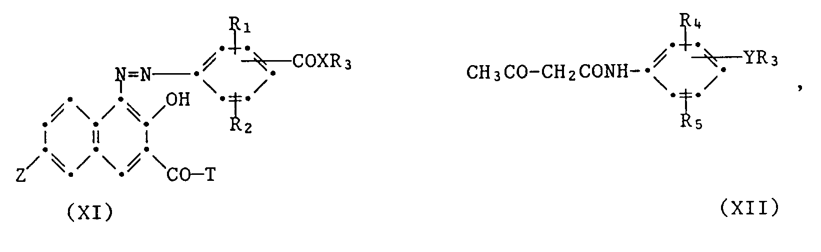 worin R₁ und R₄ -H oder -CI, R₂ und R₅ -H, Halogen, -N0₂, -CN, C1-C₄-Alkyl, C1-C₄-Alkoxy, -CF₃ oder unsubstituiertes oder durch ein oder zwei Chloratome und/oder eine oder zwei Methyl- oder Methoxygruppen substituiertes Phenyloxy, R₃ C1₂-C₃₅-Alkyl, Z -H, -Br, -OCH₃, -CN oder -N0₂, und T -OH oder Halogen bedeuten, X für einen Rest der Formeln -NH-, -O-, 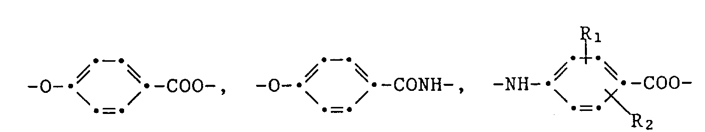 oder 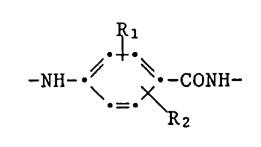 steht, wobei R₁ und R₂ die oben angegebene Bedeutung haben, und Y für einen Rest der Formeln -COO-oder -CONH- steht.

Für die Ausdeutung von Halogen, C1-C4-Alkyl, C₁-C₄-Alkoxy und R₃ sei auf die entsprechenden bereits oben aufgeführten Definitionen verwiesen. T steht bevorzugt für -OH oder -Cl.

Bevorzugte Verbindungen gemäss Formel XI haben die Formel XIII 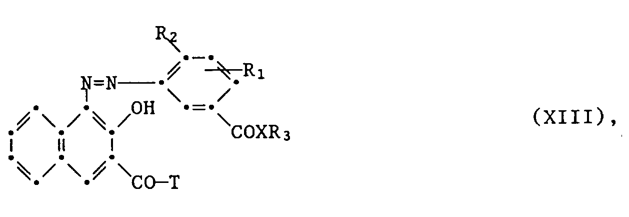 wobei
Ri, R₂, R₃, X und T die oben angegebene Bedeutung haben.

Ganz bevorzugte Verbindungen weisen die Formel XIII auf, worin R₁ -H, R₂ -CI, -CH₃ oder -OCH₃, R₃ C₁₂-C₁₈-Alkyl, X -O- oder -NH- und T -OH oder -CI bedeuten.

Die Isolierung der Verbindungen der Formeln I und 11 erfolgt nach ihrer Synthese wie üblich z.B. durch Filtration. Das Nutschgut wird z.B. mit einem der bereits oben angegebenen Lösungsmittel und dann zweckmässig noch mit Wasser gewaschen. Sie werden im allgemeinen in guter Ausbeute und Reinheit erhalten und können ohne weitere Reinigung in feinverteilter Form zum Massefärben von Kunststoffen, insbesonders von Polyolefinen, verwendet werden.

Sofern ihre Reinheit und/oder Partikel-Form und -Grösse zur Anwendung als Pigmente noch nicht genügend bzw. optimal sind, können die anmeldungsgemässen Verbindungen weiter konditioniert werden. Unter Konditionierung versteht man die Herstellung einer feinen, für die Applikation optimalen Partikel-Form und -Grösse, beispielsweise durch Trockenmahlung mit oder ohne Salz, durch Lösungsmittel- oder wässrige Mahlung oder durch Salzknetung oder durch eine nachträgliche thermische Lösungsmittelbehandlung.

Thermische Lösungsmittelbehandlungen können z.B. in organischen Lösungsmitteln, vorzugsweise mit solchen, die über 100°C sieden, durchgeführt werden.

Als besonders geeignet hierfür erweisen sich durch Halogenatome, Alkyl- oder Nitrogruppen substituierte Benzole, wie Toluol, Chlorbenzol, o-Dichlorbenzol, Xylole oder Nitrobenzol, Alkohole, wie Isopropanol oder Isobutanol, ferner Ketone, wie Cyclohexanon, Ether, wie Ethylenglykolmonomethyl-oder -monoethylether, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen oder aliphatischen Aminen, oder in flüssigem Ammoniak, durchführen.

Je nach Konditionierverfahren und/oder Applikationszweck kann es von Vorteil sein, der erfindungsgemässen Verbindung der Formeln 1 oder 11 gewisse Mengen an texturverbessernden Mitteln vor oder nach dem Konditionierprozess zuzufügen. Als solche kommen insbesondere Fettsäuren mit mindestens 18 C-Atomen, beispielsweise Stearin- oder Behensäure oder deren Amide oder Metallsalze, insbesondere Mg-Salze in Betracht. Die texturverbessernden Mittel werden vorzugsweise in Mengen von 0,1-30 Gew.%, insbesondere 2-15 Gew.%, bezogen auf das Endprodukt, zugesetzt.

Die erhaltenen erfindungsgemässen Verbindungen der Formeln I und II können aber aufgrund ihrer ausgezeichneten Polyolefinverträglichkeit oft ohne weitere Konditionierung, wie mechanische Zerkleinerung oder Präparierung, zu deren Färbung direkt in Polyolefine eingearbeitet werden.

Obwohl sie insbesondere zum Massefärben von Polyolefinen geeignet sind, können sie auch vorteilhaft zum Massefärben von anderen Polymeren, z.B. Polyvinylchlorid, insbesondere aber von Ingenieurwerkstoffen (Engineering Plastics), wie z.B. Polycarbonate, Polyacrylate, Polymethacrylate, ABS, Polyester, Polyamide, Polyetherketone, Polyurethane, einzeln oder in Mischungen, verwendet werden. Zweckmässig werden sie in einer Konzentration von 0,01 bis 5 Gew.%, bezogen auf das Polymere, eingesetzt.

Als Beispiele für Polyolefine, die mit den erfindungsgemässen Verbindungen der Formeln I und II gefärbt werden können, seien Polyethylen hoher und niederer Dichte (HD-PE, LD-PE und LLD-PE), Polypropylen und Polyisobutylen, sowie Copolymere von Polyolefinen mit z.B. Polyethern, Polyetherketonen oder Polyurethanen, erwähnt.

Die Färbung erfolgt nach den üblichen Verfahren, beispielsweise durch Mischen einer Verbindung der Formeln 1 oder 11 mit dem Kunststoffgranulat oder -pulver und Extrudieren der Mischung zu Fasern, Folien oder Granulaten. Letztere können dann im Spritzgussverfahren zu Gegenständen verformt werden.

Die erhaltenen Ausfärbungen weisen hohe Reinheit und hohe Sättigung auf und zeichnen sich durch gute Beständigkeit, insbesondere gegen Hitze und Licht, sowie durch ihre geringe Ausblühtendenz aus. Ein besonderer Vorteil von mit den erfindungsgemässen Verbindungen der Formeln I und 11 gefärbten Polyethylengegenständen besteht darin, dass sie, insbesondere im Falle von HD-PE, keine erhöhte Neigung zu Verzugs- und Deformationserscheinungen zeigen.

Die mit den erfindungsgemässen Verbindungen der Formeln I und II gefärbten Fasern besitzen ausgezeichnete textile Eigenschaften, wie z.B. Licht- und Nassbeständigkeiten gegenüber Wasch- und Lösungsmitteln.

Die nachfolgenden Beispiele dienen zur Erläuterung der Erfindung.

Beispiel 1: 4,05 g 4-Methyl-3-amino-benzoesäurestearylester und 3,8 g 4-Benzoylamino-1-(2'-hydroxy-3'-naphthoylamino)-benzol werden in einer Mischung aus 125 ml Eisessig und 125 ml N-Methylpyrrolidon bei 70 ° C gelöst. Die klare rotbraune Lösung wird auf 40 ° C abgekühlt und bei dieser Temperatur mit 2,55 ml einer 4N-Natriumnitritlösung tropfenweise versetzt. Ein roter Niederschlag fällt aus. Die erhaltene rote Suspension wird noch während 6 Stunden nachgerührt. Das Produkt wird dann abgenutscht und mit 300 ml Ethylalkohol gewaschen. Nach dem Trocknen im Vakuum bei 60 ° C erhält man 7,2 g (90,5 % der Theorie) eines intensiv roten Pulvers der Formel 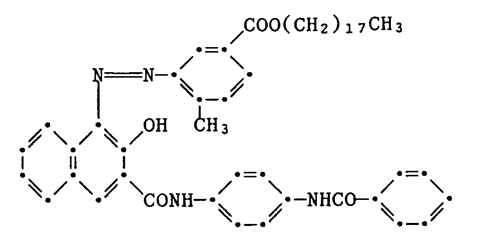 mit folgender Verbrennungsanalyse (C₅₀H₆₀N₄O₅):

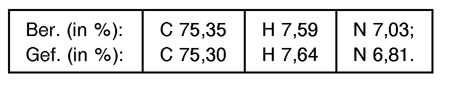

Dieses während 1 Stunde bei 125 ° C in Ethylenglykolmonoethylether nachbehandelte Produkt färbt Polyethylen in farbstarken reinen roten Tönen von ausgezeichneter Hitze- und Lichtbeständigkeit.

Beispiele 2 bis 51: In nachstehender Tabelle sind weitere Verbindungen beschrieben, die analog dem obigen Beispiel 1 durch Kuppeln des diazotierten Amins gemäss Spalte I mit einer Kupplungskomponente der Spalte II erhalten werden. Spalte III gibt den Farbton der mit den so erhaltenen Verbindungen gefärbten PVC-Folie an. In den Fällen, wo die Komponenten der Spalten I und II bereits in Eisessig bis 80 ° C klar löslich sind, kann man auf die Zugabe von N-Methyl-pyrrolidon verzichten. Ansonsten verfährt man nach Beispiel 1.

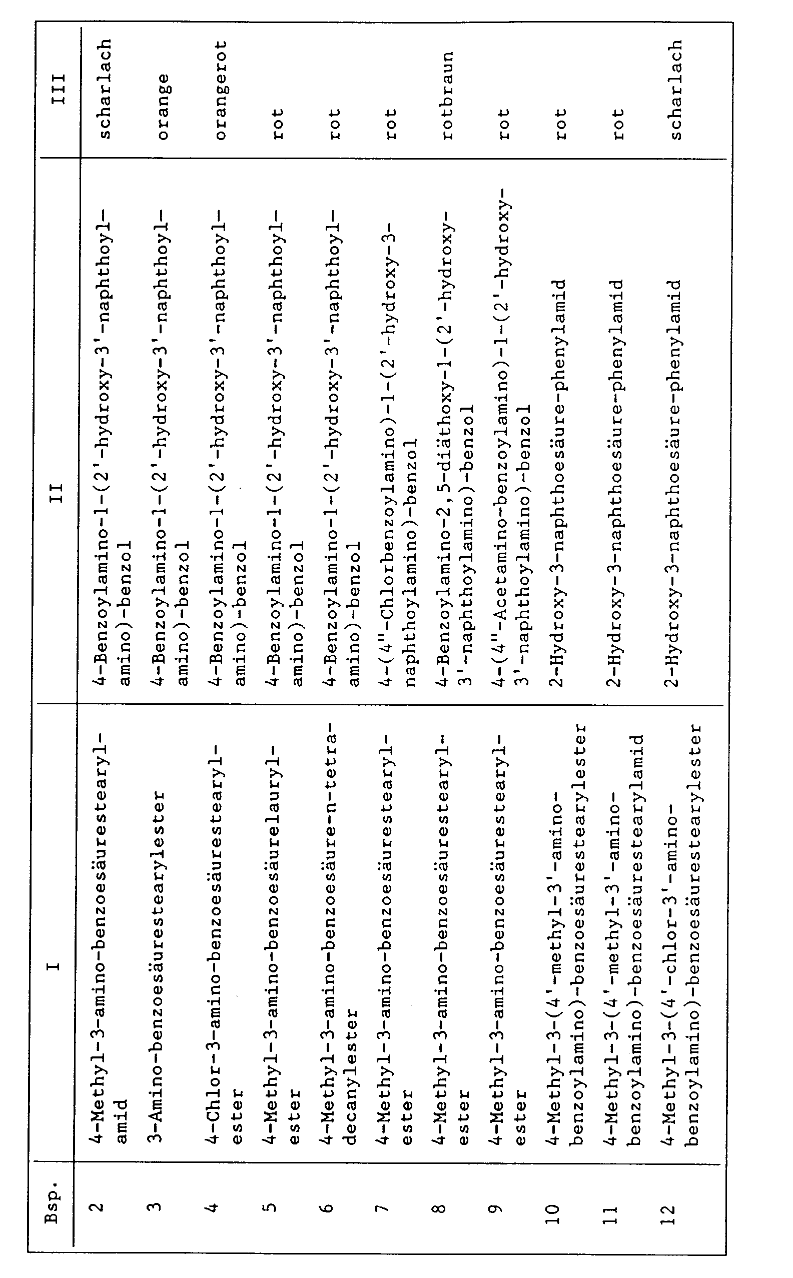

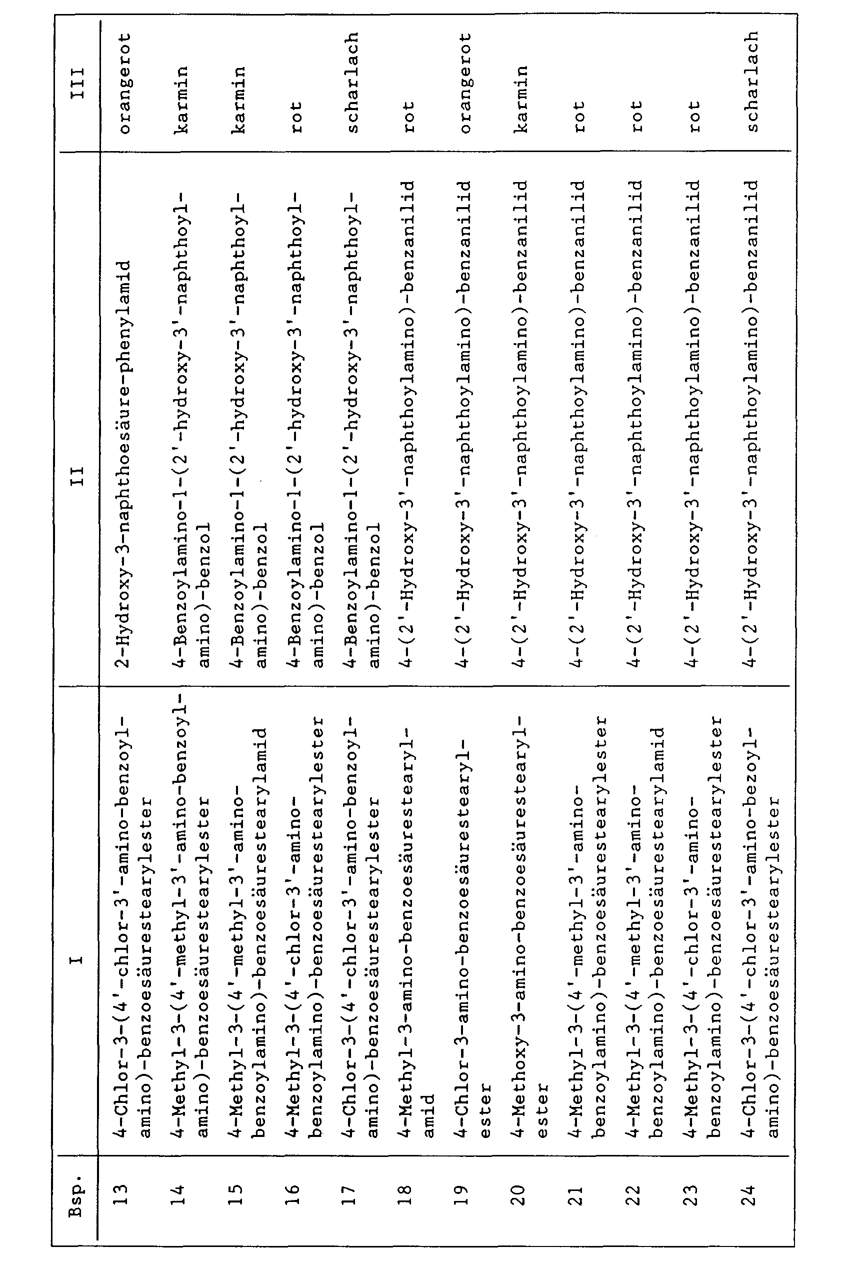

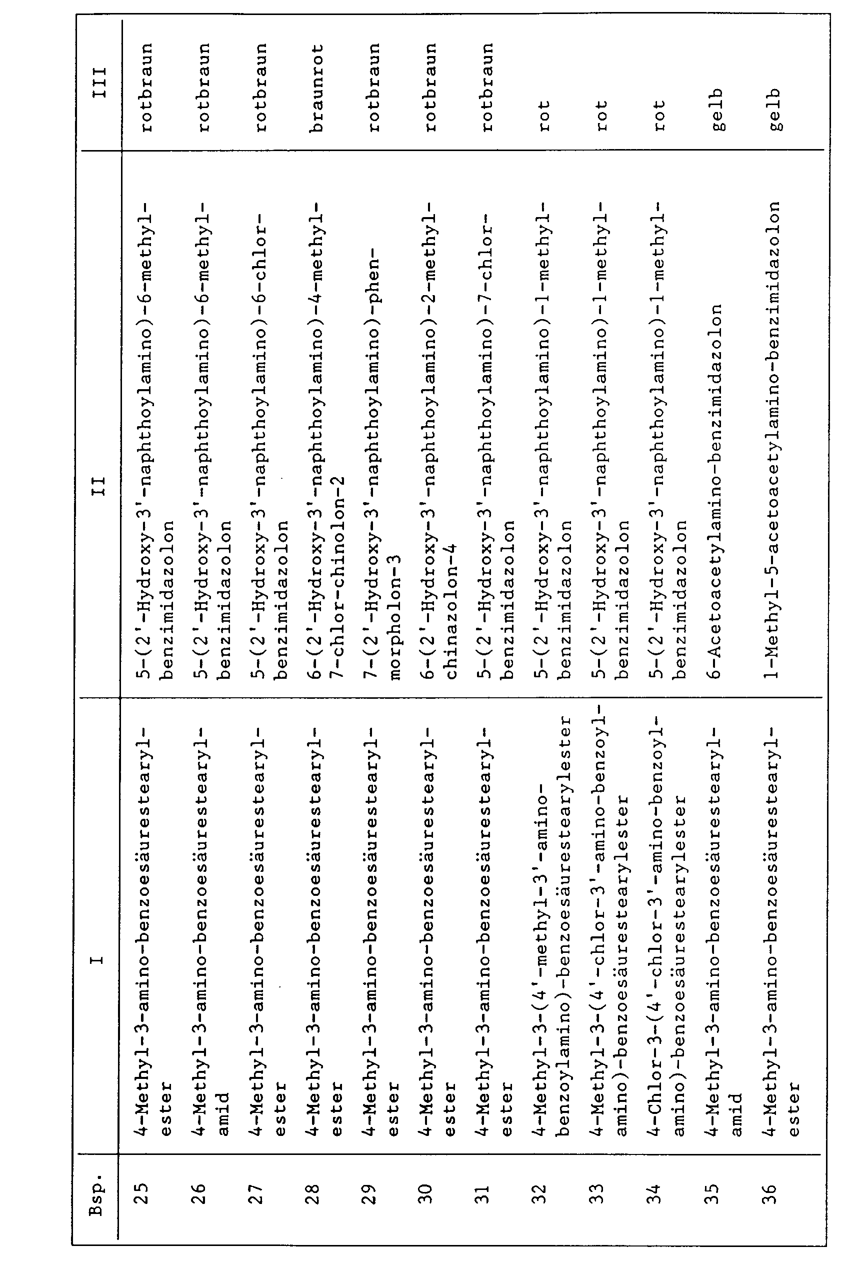

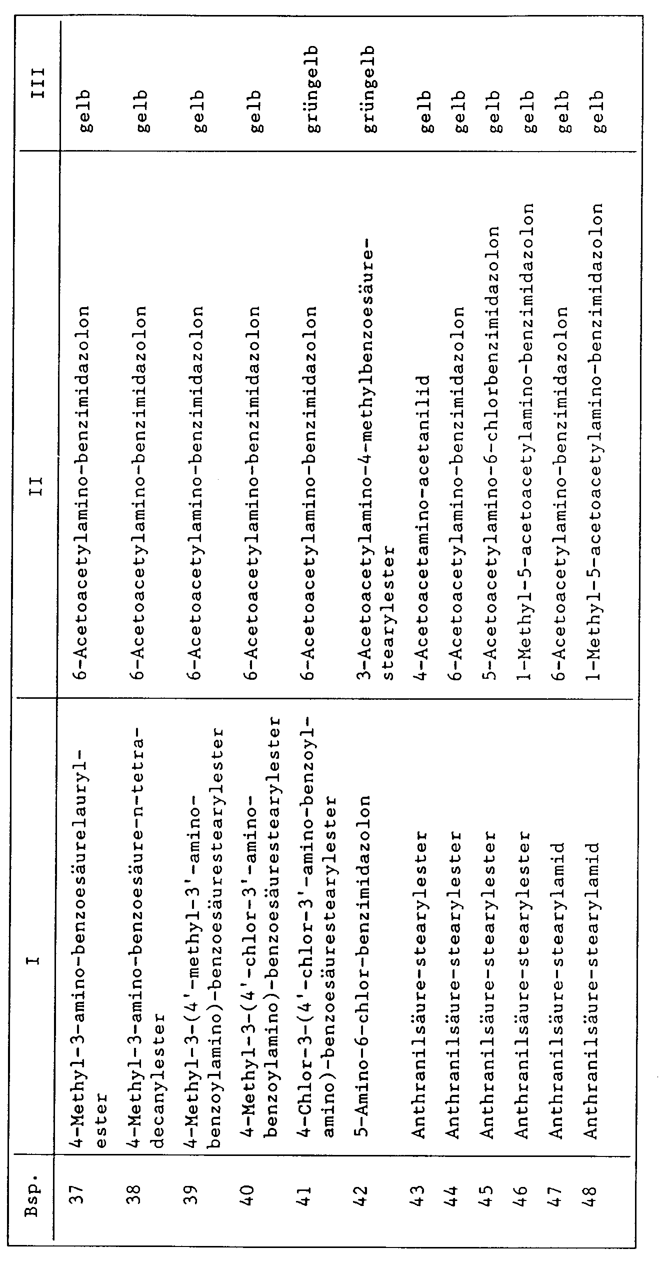

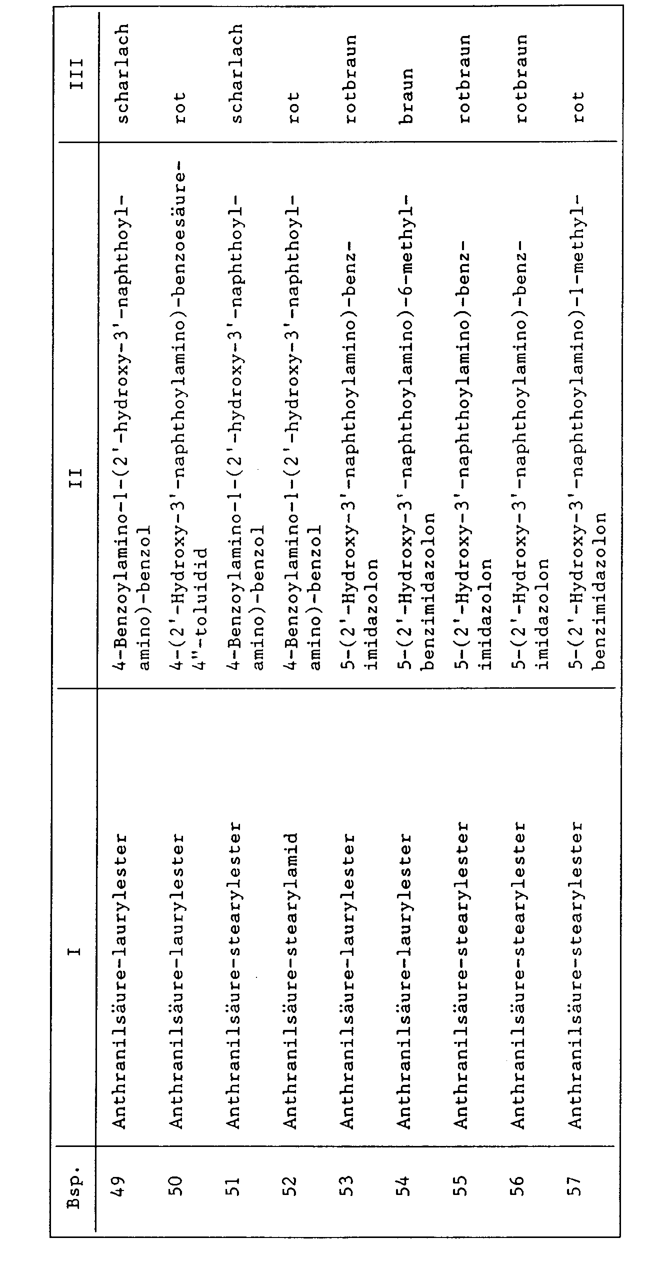

Beispiel 58: 12,4 g des Azofarbstoffes aus diazotiertem 4-Methoxy-3-amino-benzoesäurestearylester und 2-Hydroxy-3-naphthoesäure werden in 120 ml wasserfreiem Toluol suspendiert. Man gibt zum Gemisch 2 ml Thionylchlorid und 4 Tropfen Dimethylformamid und erwärmt eine Stunde und 15 Minuten unter Rühren auf 80 °C. Die rotbordeaux gefärbte Lösung wird im Vakuum voll eingeengt. Das erhaltene Produkt wird dann mit 50 ml Petrolether aus dem Kolben herausgeholt, abgenutscht, und im Vakuum bei 50 ° C getrocknet. Man erhält 12,2 g (95,7 % d.Th.) des Azocarbonsäurechlorides der Formel 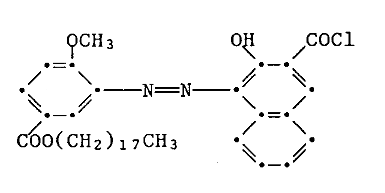 und vom Schmelzpunkt 129 bis 130°C.

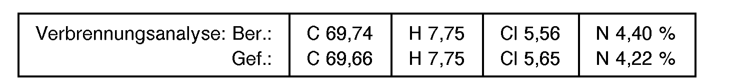

6,4 g des so hergestellten Azocarbonsäurechlorides werden mit 100 ml N-Methylpyrrolidon verrührt und auf 60 ° C erhitzt. Die klare schwarze Lösung wird bei dieser Temperatur mit 1,6 g 5-Amino-1-methyl- benzimidazolon versetzt. Es entsteht dabei eine dicke rote Suspension. Man erwarmt sie unter Rühren auf 92 ° C und rührt sie während 7 Stunden bei dieser Temperatur weiter. Die Suspension wird auf Raumtemperatur abgekühlt und mit 60 ml Ethanol verdünnt. Das Produkt wird schliesslich abgenutscht und mit 200 ml Ethanol gewaschen. Nach Trocknung des Produktes im Vakuum bei 60 ° C werden 7,2 g (94 % d.Th.) eines weichkörnigen roten Pulvers erhalten, das z.B. Polyethylen, Polyamid und Polyvinylchlorid in farbstarken roten Tönen von guter Hitze- und Lichtbeständigkeit färbt.
Formel des erhaltenen Produktes:

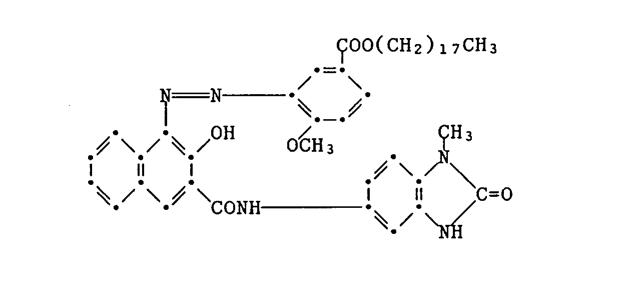

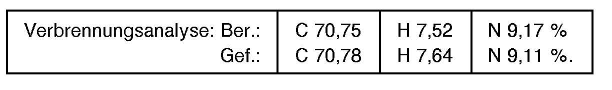

Die folgende Tabelle enthält weitere Pigmente, die nach dem Verfahren des obigen Beispiels 58 hergestellt werden können, indem man die Diazoverbindung eines in der Spalte I aufgeführten Amines auf 2-Hydroxy-3-naphthoesäure kuppelt, die so erhaltene Azocarbonsäure dann in das entsprechende Säurechlorid überführt und dieses mit einem der in der Spalte II angegebenen Amine kondensiert. Spalte III charakterisiert die Nuance der mit den erhaltenen Pigmenten eingefärbten Polyvinylchloridfolie.

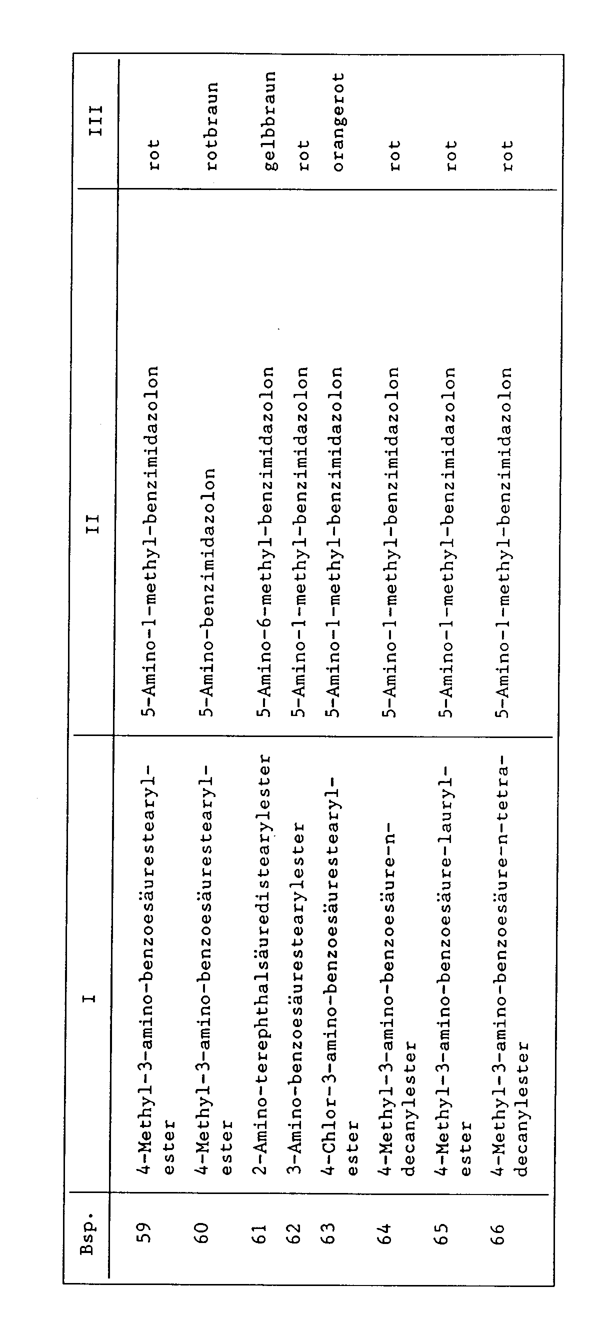

Beispiel 67: Eine Mischung von 1,0 g des nach Beispiel 1) erhaltenen Produktes, 1,0 g Antioxidans (@IRGANOX 1010, CIBA-GEIGY AG) und 1000 g Polyethylen HD Granulat (®VESTOLEN A 60-16, HUELS) wird während 15 Minuten in einer 3 I-Glasflasche auf einem Rollbock vorgemischt. Danach wird die Mischung zweimal durch einen Einwellenextruder extrudiert und anschliessend granuliert. Das so erhaltene Granulat wird dann auf einer Spritzgussmaschine (@Allround Arburg 200) bei 220 ° C, 250 ° C und 300 ° C mit einer Verweilzeit von je 5 Minuten zu Platten verspritzt. Die so erhaltenen Platten weisen gleichmässig farbstarke rote Färbungen auf und sind ebenso verzugsfrei wie Spritzlinge des ungefärbten Polyethylens. Werden die so gefärbten gespritzten Platten während 24 Stunden bei 100 ° C in einem Ofen gelagert, so kann kein Ausblühen des Pigmentes aus dem Kunststoff festgestellt werden.

Beispiel 68: Verfährt man analog wie in Beispiel 67 beschrieben und verwendet aber neben dem Buntpigment 10 g Titandioxid @KRONOS RN 57-P (KRONOS Titan GmbH), so erhält man rote Pressplatten mit ebensoguten Hitzebeständigkeiten. Die zwischen 200 und 300 ° C gespritzten Pressplatten weisen nach dem Erkalten keine Farbabweichungen auf.

Beispiel 69: 1000 g Polypropylengranulat (®DAPLEN PT-55, Chemie LINZ) und 1,0 g des nach Beispiel 1) erhaltenen Produktes werden in einer 3 I-Flasche 15 Minuten auf einem Rollbock gemischt. Danach wird die Mischung zweimal durch einen Einwellenextruder extrudiert und anschliessend granuliert. Das so erhaltene Granulat wird bei 280-285 ° C nach dem Schmelzspinnverfahren versponnen. Die so gefärbten Fasern weisen sehr gute Lichtbeständigkeit und ausgezeichnete textile Echtheiten, wie Reibechtheit und Nassechtheit gegenüber Wasch- und Lösungsmitteln, auf. Die Hitzebeständigkeit bei 285 ° C ist ausgezeichnet.

Beispiel 70: 100 g Polymethylmethacrylatgranulat (®DEGALAN 7E der Firma DEGUSSA AG) und 0,2 g des nach Beispiel 1) erhaltenen Produktes werden während 20 Minuten in einer 500 ml-Glasflasche auf einem Rollbock vorgemischt. Danach wird die Mischung auf einem Einwellenextruder zu einem Band extrudiert. Man erhält ein transparentes stark rot gefärbtes Kunststoffband, welches ausgezeichnete Hitze-und Lichtbeständigkeiten aufweist.

Beispiel: 71: Verfährt man analog wie in Beispiel 70 beschrieben und verwendet aber anstelle von Polymethylmethacrylat ein Polycarbonatgranulat (®MAKROLON 2800 der Firma BAYER), so erhält man transparente intensiv rote Bänder mit ausgezeichneten Hitze- und Lichtbeständigkeiten.

## Patentansprüche

1. Verbindungen der Formeln I und II 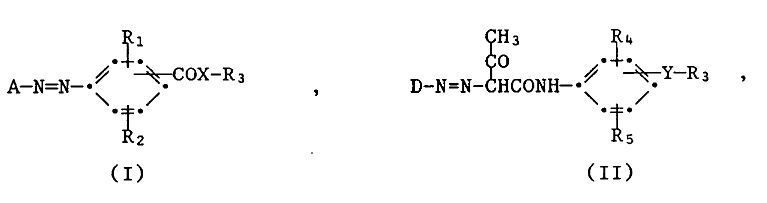 worin A für einen Rest der Formeln III, IV oder V 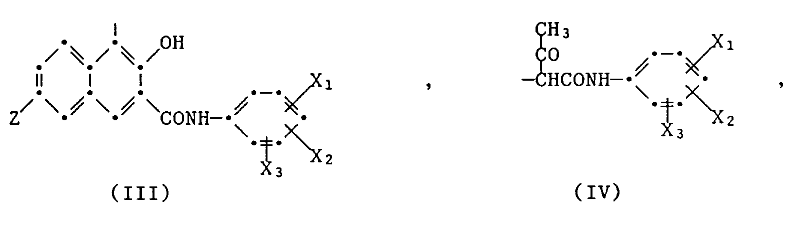 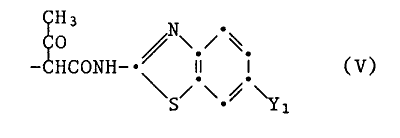 steht,
R₁ und R₄ -H oder -CI,
R₂ und R₅ -H, Halogen, -N0₂, -CN, C1-C₄-Alkyl, C1-C₄-Alkoxy, -CF₃ oder unsubstituiertes oder durch ein oder zwei Chloratome und/oder eine oder zwei Methyl- oder Methoxygruppen substituiertes Phenyloxy, und
R₃ C₁₂-C₃₅-Alkyl bedeuten,
X für einen Rest der Formeln -NH-, -O-, 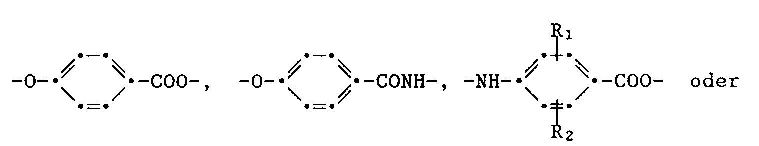 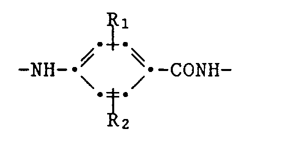 steht,
Y ein Rest der Formeln -COO- oder -CONH- ist,
D einen aromatischen heterocyclischen 5- oder 6-Ring bedeutet, wobei der Ring 1 oder 2 N-Atome enthält und noch ein O-Atom oder S-Atom aufweisen kann,
Z -H, -Br, -OCH₃, -CN oder -N0₂ und
X₁ und X₂ unabhängig voneinander -H, -CI, -CH₃ oder -OCH₃, und X₃ -H, -NHCOCH₃, unsubstituiertes oder durch ein oder zwei Chloratome und/oder eine oder zwei Methyl-oder Methoxygruppen oder durch -NHCOCH₃ substituiertes Benzoylamino oder Phenylcarbonamido sind, oder X₂ und X₃ zusammen mit dem Kohlenstoffatom, an das sie gebunden sind, einen Ring der Formeln 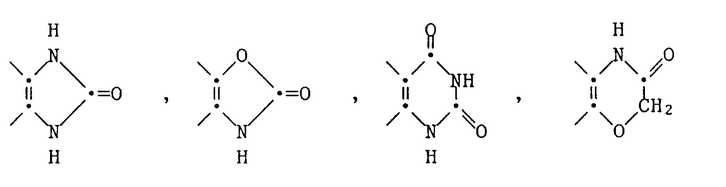 oder, wenn A für einen Rest der Formel III steht, zusätzlich auch 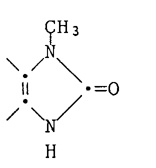 bilden und Y₁ -H, -OCH₃, -OC₂Hs oder -NHCOCH₃ bedeutet, mit der Massgabe, dass X₃ nicht H sein darf, wenn X -O- oder -NH- bedeutet.

2. Verbindungen der Formeln I und II gemäss Anspruch 1, worin X für -O-oder -NH- steht und die übrigen Symbole die in Anspruch 1 angegebene Bedeutung haben.

3. Verbindungen gemäss Anspruch 1, wobei sie die Formeln VI und VII 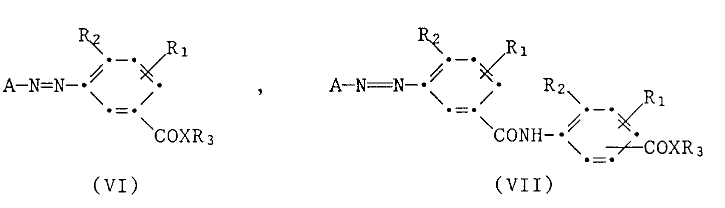 aufweisen,
worin X für -O- oder -NH- steht, R₁ -H oder -CI, und R₂ -CI, -CH₃, -OCH₃, -OC₂Hₛ oder -OC₆H₅ bedeuten, A für einen Rest der Formel III gemäss Anspruch 1 steht, wobei Z -H, X₁ und X₂ unabhängig voneinander -H, -CI, -CH₃ oder -OCH₃, und X₃ -H, -NHCOCH₃, unsubstituiertes oder durch ein oder zwei Chloratome und/oder eine oder zwei Methyl-oder Methoxygruppen oder durch -NHCOCH₃ substituiertes Benzoylamino oder Phenylcarbonamido sind, oder X₂ und X₃ zusammen mit dem Kohlenstoffatom, an das sie gebunden sind, einen Ring der Formeln 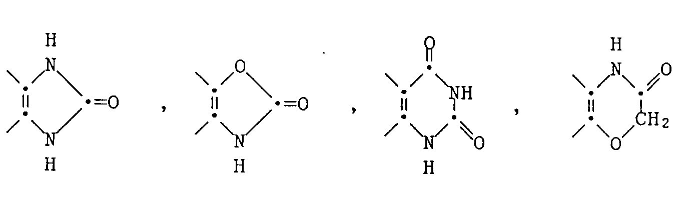 oder, wenn A für einen Rest der Formel III steht, zusätzlich auch 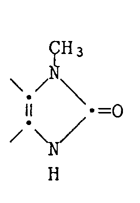 bilden und R₃ C₁₂-C₁₈-Alkyl ist, mit der Massgabe, dass X₃ bei der Formel VI nicht -H sein darf, wenn X -O- oder -NH- bedeutet.

4. Verbindungen der Formel VI oder VII gemäss Anspruch 3, wobei R₁ -H, und R₂ -CI, -CH₃ oder -OCH₃ sind, und sich die Gruppe -COXR₃ (in der Formel VII) in para-Stellung zur Gruppe R₂ befindet.

5. Verbindungen der Formel VI gemäss Anspruch 3, wobei sie die Formel VIII 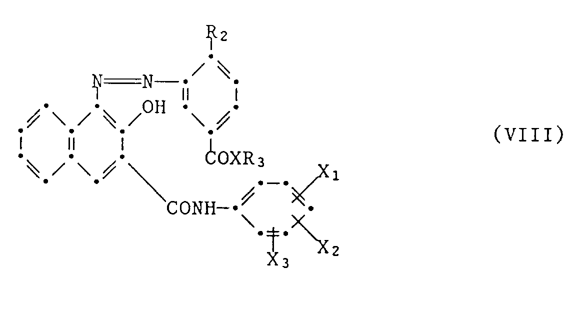 aufweisen,
worin X für -O- oder -NH- steht, R₂ -CH₃ und R₃ C₁₂-C₁₈-Alkyl sind, und die übrigen Substituenten X₁ , X₂ und X₃ die im Anspruch 3 angegebene Bedeutung haben.

6. Verbindungen gemäss Anspruch 1, wobei sie die Formeln IX und X 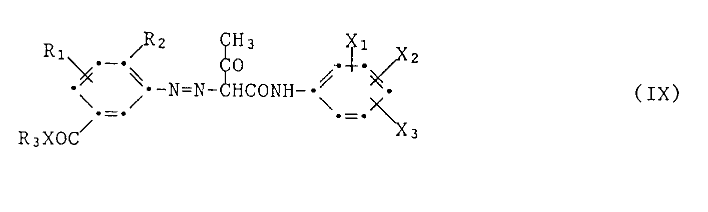 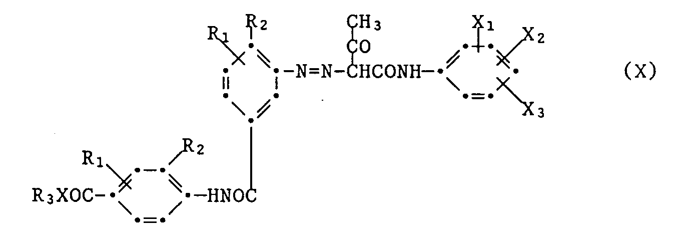 aufweisen,
worin X für -O- oder -NH- steht, R₁ -H oder -CI, R₂ -CI, -CH₃ oder -OCH₃ und R₃ C1₂-C18-Alkyl bedeuten, X₁ und X₂ unabhängig voneinander -H, -CI, -CH₃ oder -OCH₃, X₃ -H, -NHCOCH₃, unsubstituiertes oder durch ein oder zwei Chloratome und/oder eine oder zwei Methyl- oder Methoxygruppen oder durch -NHCOCH₃ substituiertes Benzoylamino bedeuten, oder X₂ und X₃ zusammen mit dem Kohlenstoffatom, an das sie gebunden sind, einen Ring der Formel 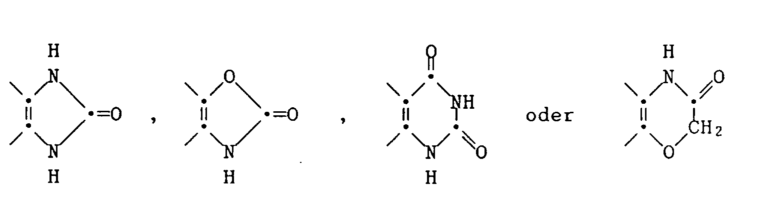 bilden.

7. Verbindungen der Formeln XI und XII 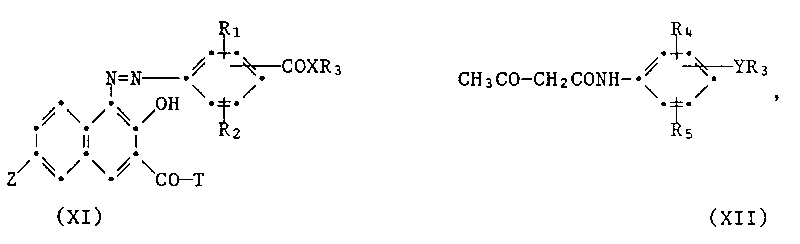 worin R₁ und R₄ -H oder -CI, R₂ und R₅ -H, Halogen, -N0₂, -CN, C₁-C₄-Alkyl, C₁-C₄-Alkoxy, -CF₃ oder unsubstituiertes oder durch ein oder zwei Chloratome und/oder eine oder zwei Methyl- oder Methoxygruppen substituiertes Phenyloxy, R₃ C₁₂-C₃₅-Alkyl, Z -H, -Br, -OCH₃, -CN oder -N0₂, und T -OH oder Halogen bedeuten, X für einen Rest der Formeln -NH-, -O-, 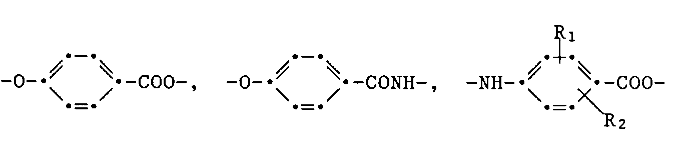 oder 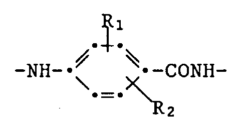 steht,
und Y für einen Rest der Formeln -COO- oder -CONH- steht, wobei R₁ und R₂ die oben im Anspruch 7 angegebene Definition haben.

8. Verbindungen gemäss Anspruch 7, wobei sie die Formel XIII 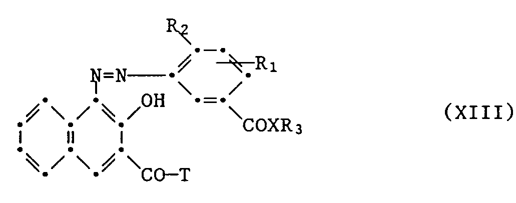 aufweisen, worin T, Ri, R₂, R₃ und X die im Anspruch 7 angegebene Bedeutung haben.

9. Verbindungen der Formel XIII gemäss Anspruch 8, worin R₁ -H, R₂ -CI, -CH₃ oder -OCH₃, R₃ C₁₂-C₁₈-Alkyl, X -O- oder -NH- und T -OH oder -CI bedeuten.

10. Verfahren zum Massefärben von Polyolefinen, dadurch gekennzeichnet, dass man als Farbmittel eine Verbindung der Formeln I oder II gemäss Anspruch 1 verwendet.

## Claims

1. A compound of the formula I or II 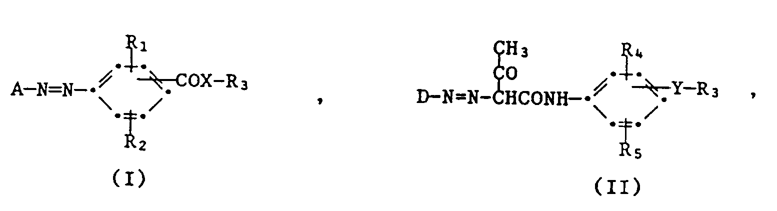 in which A is a radical of the formula III, IV or V 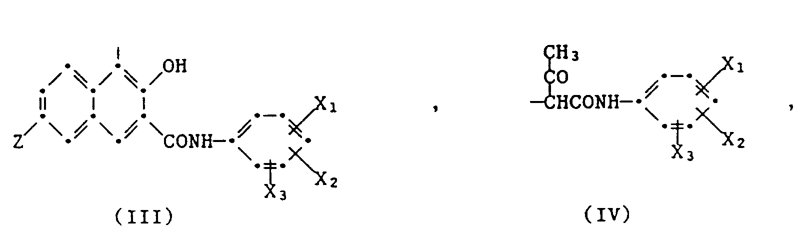 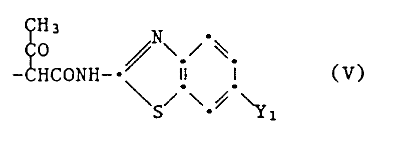 R₁ and R₄ are -H or -Cl, R₂ and R₅ are -H, halogen, -N0₂, -CN, C₁-C₄alkyl, C₁-C₄alkoxy, -CF₃ or phenyloxy which is unsubstituted or substituted by one or two chlorine atoms and/or one or two methyl or methoxy groups, and R₃ is C₁₂-C₃₅alkyl, X is a radical of the formula -NH-, -O-, 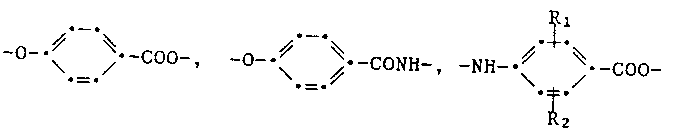 oder or 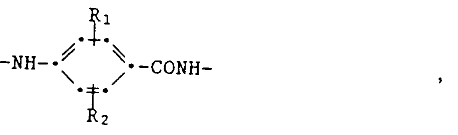 Y is a radical of the formula -COO- or -CONH-, D is an aromatic heterocyclic 5- or 6-membered ring, in which the ring contains 1 or 2 N atoms and may additionally contain an O atom or S atom, Z is -H, -Br, -OCH₃, -CN or -N0₂ and X₁ and X₂, independently of one another, are -H, -Cl, -CH₃ or -OCH₃, and X₃ is -H, -NHCO-C₁-C₄alkyl, benzoylamino or phenylcarboxamido each of which is unsubstituted or substituted by one or two chlorine atoms and/or one or two methyl or methoxy groups or by -NHCOCH₃, or X₂ and X₃ together with the carbon atom to which they are bound are a ring of formula 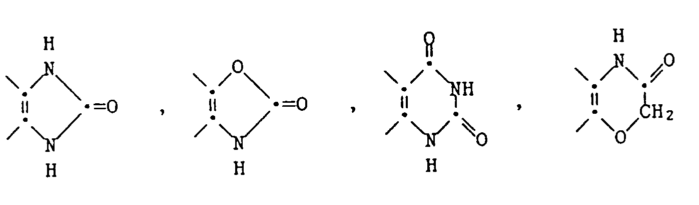 or, if A is a radical of the formula III, they also form in addition 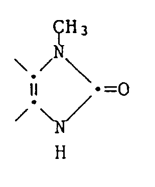 and Y₁ is -H, -OCH₃, -OC₂H₅ or -NHCOCH₃, with the proviso that X₃ must not be H if X is -O- or -NH-.

A compound of the formula I or II according to claim 1, in which X is -O- or -NH- and the remaining symbols are as defined in claim 1.

A compound according to claim 1, which has the formula VI or VII 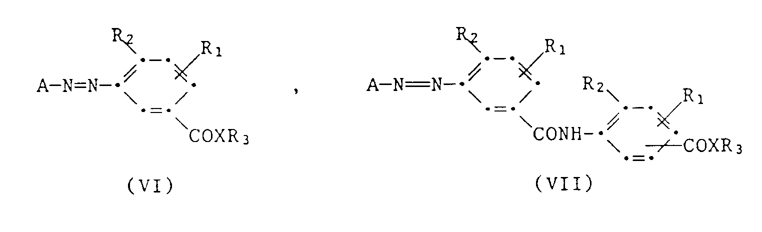 in which X is -O- or -NH-, R₁ is -H or -Cl, and R₂ is -Cl, -CH₃, -OCH₃, -OC₂H₅ or -OC₆H₅, A is a radical of the formula III according to claim 1 in which Z is -H, X₁ and X₂, independently of one another, are -H, -Cl, - CH₃ or -OCH₃, and X₃ is -H, -NHCOCH₃, benzoylamino or phenylcarboxamido each of which is unsubstituted or substituted by one or two chlorine atoms and/or one or two methyl or methoxy groups or by -NHCOCH₃, or X₂ and X₃ together with the carbon atom to which they are bound form a ring of the formula 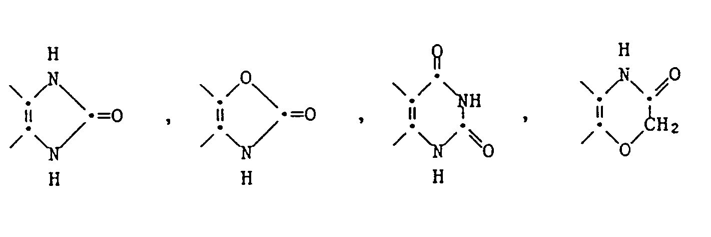 or, if A is a radical of the formula III, they also form in addition 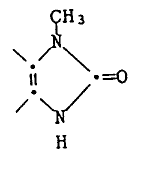 and R₃ is C₁₂-C₁₈alkyl, with the proviso that X₃ in formula VI must not be -H if X is -O- or -NH-.

A compound of the formula VI or VII according to claim 3, in which R₁ is -H, and R₂ is -Cl, -CH₃ or -OCH₃, and the group -COXR₃ (in formula VII) is in the para-position relative to the group R₂.

5. A compound of the formula VI according to claim 3, which has the formula VIII 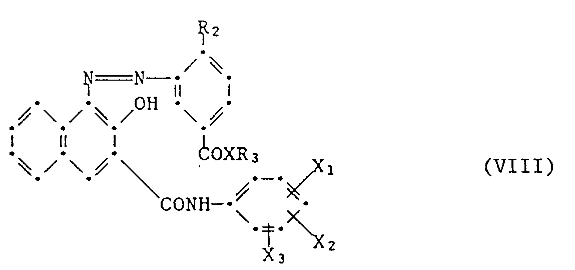 in which X is -O- or -NH-, R₂ is -CH₃ and R₃ is C₁₂-C₁₈alkyl, and the remaining substituents Xi, X₂ and X₃ are as defined in claim 3.

6. A compound according to claim 1, which has the formula IX or X 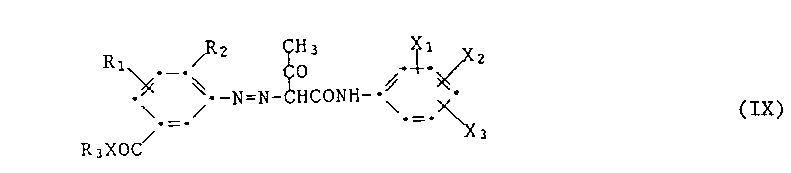 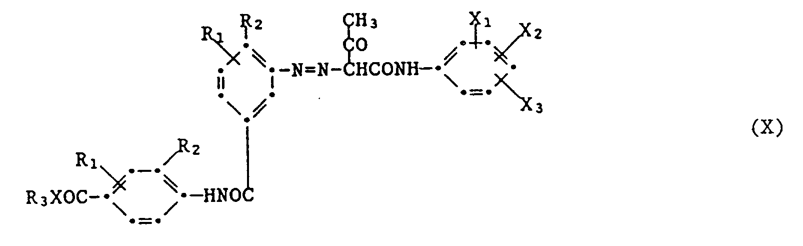 in which X is -O- or -NH-, R₁ is -H or -Cl, R₂ is -Cl, -CH₃ or -OCH₃ and R₃ is C₁₂-C₁₈alkyl, X₁ and X₂, independently of one another, are -H, -Cl, -CH₃ or -OCH₃, and X₃ is -H, -NHCOCH₃, benzoylamino which is unsubstituted or substituted by one or two chlorine atoms and/or one or two methyl or methoxy groups or by -NHCOCH₃, or X₂ and X₃ together with the carbon atom to which they are bound form a ring of the formula 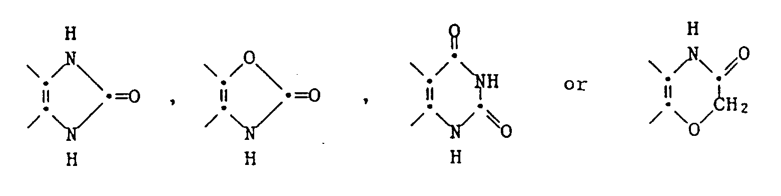 or

7. A compound of the formula XI or XII 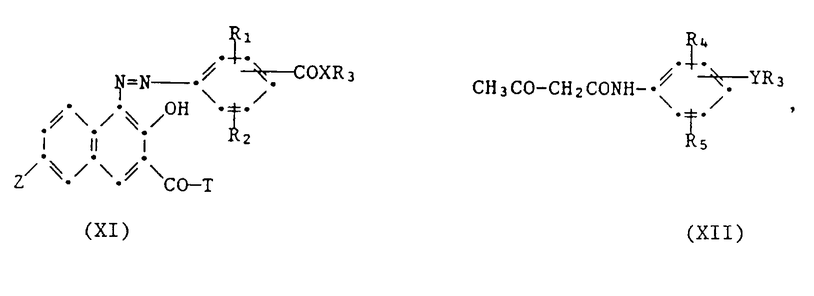 in which R₁ and R₄ are -H or -Cl, R₂ and R₅ are -H, halogen, -N0₂, -CN, C₁-C₄alkyl, C₁-C₄alkoxy, -CF₃ or phenyloxy which is unsubstituted or substituted by one or two chlorine atoms and/or one or two methyl or methoxy groups, R₃ is C₁₂-C₃₅alkyl, Z is -H, -Br, -OCH₃, -CN or N0₂, and T is -OH or halogen, X is a radical of the formulae -NH-, -O-, 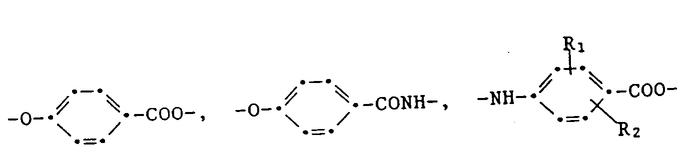 or 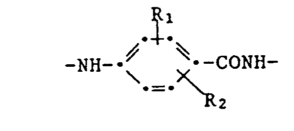 steht,
and Y is a radical of the formula -COO- or -CONH-, in which R₁ and R₂ are as defined above in claim 7.

8. A compound according to claim 7, which has the formula XIII 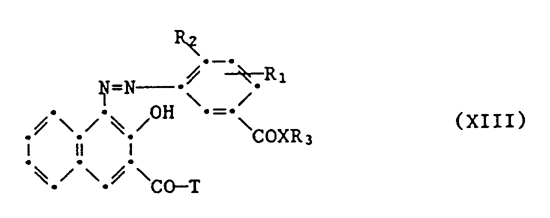 in which T, R₁, R₂, R₃, and X are as defined in claim 7.

9. A compound of the formula XIII according to claim 8, in which R₁ is -H, R₂ is -Cl, -CH₃ or -OCH₃, R₃ is C₁₂-C₁₈alkyl, X is -O- or -NH- and T is -OH or -Cl.

10. A process for the mass colouration of polyolefins, which comprises using a compound of the formula I or II according to claim 1 as the colorant.

## Revendications

1. Composés de formules 1 et II 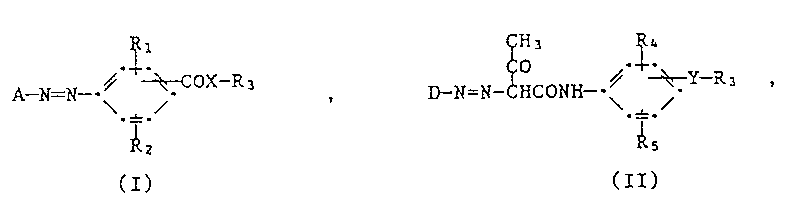 où A représente un radical des formules III, IV ou V 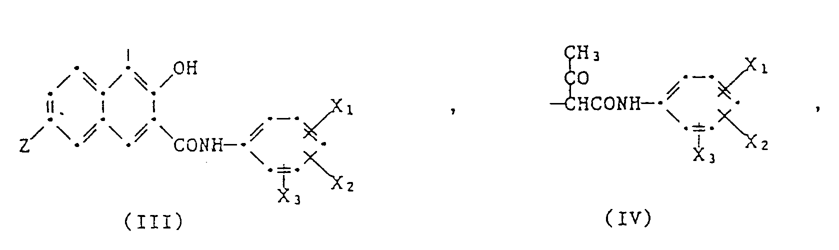 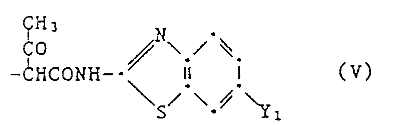
R₁ et R₄ représentent -H ou -CI,
R₂ et R₅ représentent -H, un halogène, -N0₂, -CN, les alkyle en C₁-C₄, alcoxy en C₁-C₄, -CF₃ ou phényloxy non substitué ou substitué par un ou deux atomes de chlore et/ou un ou deux groupes méthyle ou méthoxy, et les radicaux
R₃ représentent un alkyle en C₁₂-C₃₅,
X correspond à un radical de formules -NH-, -O-, 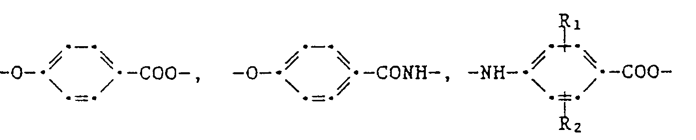 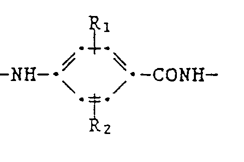
Y représente un radical de formule -COO- ou -CONH-,
D représente un cycle aromatique hétérocyclique à 5 ou 6 chaînons, le cycle contenant 1 ou 2 atomes de N et pouvant présenter encore un atome de O ou de S,
Z représente -H, -Br, -OCH₃, -CN ou -N0₂ et
X₁ et X₂, indépendamment l'un de l'autre, représentent -H, -CI, -CH₃ ou -OCH₃ et X₃ représente -H, -NHCOCH₃, phénylcarboxamido ou benzoylamino non substitué ou substitué par 1 ou 2 atomes de chlore et/ou 1 ou 2 groupes méthyle ou méthoxy ou par - NHCOCH₃, ou X₂ et X₃, ensemble avec l'atome de carbone auquel ils sont liés, forment un cycle de formules 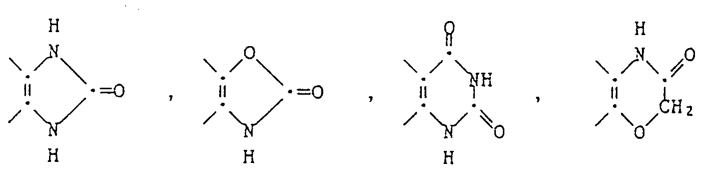 ou, si A correspond à un radical de formule III, forment de façon supplémentaire aussi 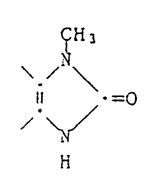 et Y₁ signifie -H, -OCH₃, -OC₂Hs ou -NHCOCH₃, à la condition que X₃ ne peut pas être H, lorsque X signifie -O- ou -NH-.

2. Composés de formules 1 et II selon la revendication 1, où X représente -O- ou -NH- et les autres symboles ont la signification donnée dans la revendication 1.

3. Composés selon la revendication 1, présentant les formules VI et VII 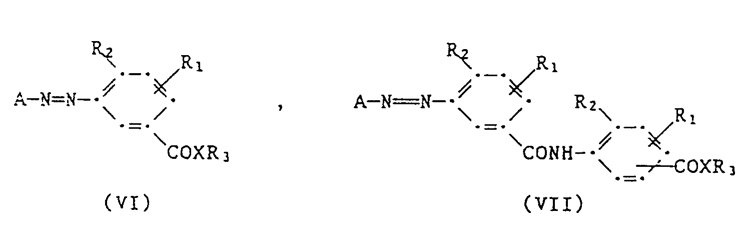 dans lesquelles X représente -O- ou -NH-, R₁ représente -H ou -CI, et R₂ représente -CI, -CH₃, -OCH₃, -OC₂H₅ ou -OC₆H₅, A correspond à un radical de formule III selon la revendication 1, Z représentant -H, X₁ et X₂, indépendamment l'un de l'autre, représentent -H, -CI, -CH₃ ou -OCH₃, et X₃ représente -H, -NHCOCH₃, un phénylcarboxamido ou benzoylamido non substitué ou substitué par 1 ou 2 atomes de chlore et/ou 1 ou 2 groupes méthyle ou méthoxy ou par -NHCOCH₃, ou X₂ et X₃, ensemble avec l'atome de carbone auquel ils sont liés, forment un cycle de formules 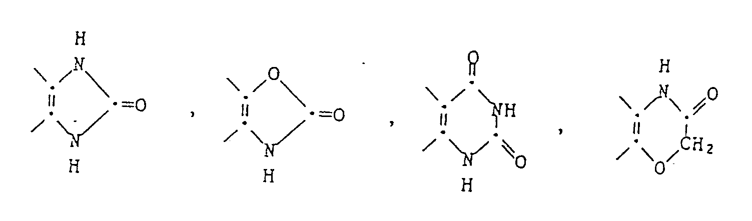 ou, si A représente un radical de formule III, forment, de plus, aussi 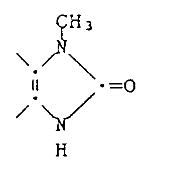 et R₃ représente un alkyle en C₁₂-C₁₈, à la condition que X₃ dans la formule VI ne peut pas être -H, lorsque X signifie -O- ou -NH-.

4. Composés de formule VI ou VII selon la revendication 3, R₁ représentant -H et R₂ représentant -CI, -CH₃ ou -OCH₃, et le groupe -COXR₃ (dans la formule VII) se trouvant en position para par rapport au groupe R₂.

5. Composés de formule VI selon la revendication 3, présentant la formule VIII 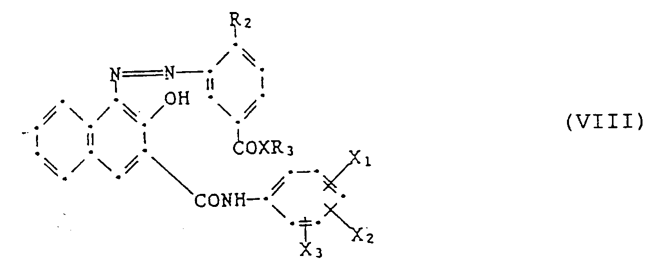 dans laquelle X correspond à -O- ou -NH-, R₂ représente -CH₃ et R₃ représente un alkyle en C₁₂-C₁₈, et les autres substituants Xi , X₂ et X₃ ont les significations données dans la revendication 3.

6. Composés selon la revendication 1, présentant des formules IX et X 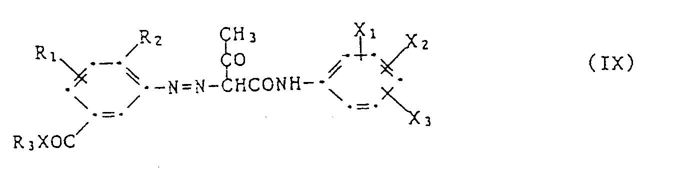 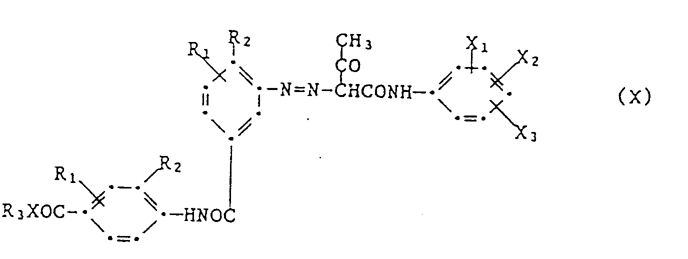 où X correspond à -O- ou -NH-, R₁ représente -H ou -CI, R₂ représente -CI, -CH₃ ou -OCH₃ et R₃ représente un alkyle en C₁₂-C₁₈, Xᵢ et X₂, indépendamment l'un de l'autre, représentent -H, -CI, -CH₃ ou -OCH₃, et X₃ représente -H, -NHCOCH₃, un benzoylamino non substitué ou substitué par 1 ou 2 atomes de chlore et/ou 1 ou 2 groupes méthyle ou méthoxy ou par -NHCOCH₃, ou X₂ et X₃, ensemble avec l'atome de carbone auquel ils sont liés, forment un cycle de formules

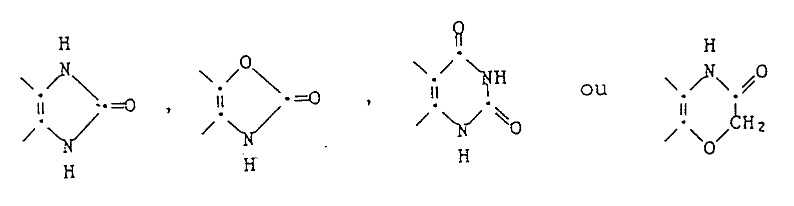

7. Composés de formules XI et XII 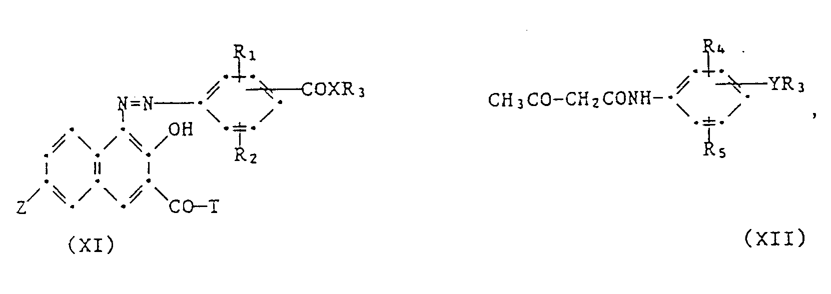 où R₁ et R₄ représentent -H ou -CI, R₂ et R₅ représentent -H, un halogène, -N0₂, -CN, les alkyle en C₁-C₄, alcoxy en C₁-C₄, -CF₃ ou phényloxy non substitué ou substitué par un ou deux atomes de chlore et/ou par un ou deux groupes méthyle ou méthoxy, R₃ représente un alkyle en C₁₂-C₃₅, Z représente -H, -Br, -OCH₃, -CN ou -N0₂, et T représente -OH ou un halogène, X correspond aux radicaux de formules -NH-, -O-, 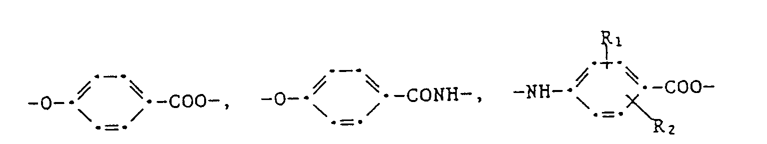 ou 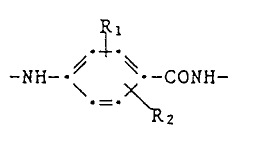 Y représente un radical de formules -COO- ou -CONH-, R₁ et R₂ ayant la définition donnée ci-dessus dans la revendication 7.

8. Composés selon la revendication 7, présentant la formule XIII 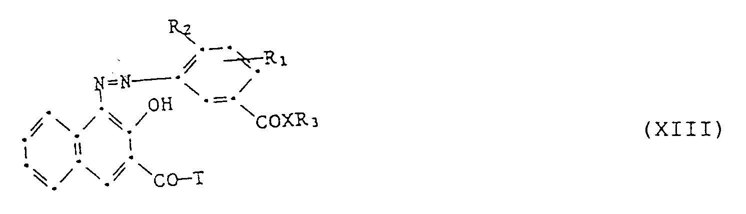 où T, Ri, R₂, R₃ et X ont la signification donnée dans la revendication 7.

9. Composés de formule XIII selon la revendication 8, où R₁ signifie -H, R₂ signifie -CI, -CH₃ ou -OCH₃, R₃ signifie un alkyle en C₁₂-C₁₈, X signiofie -O- ou -NH- et T signifie -OH ou -CI.

10. Procédé pour la coloration en masse de polyoléfines, caractérisé en ce qu'on utilise en tant que colorant un composé de formules 1 ou II selon la revendication 1.
